# FASCICULE DE BREVET EUROPEEN

(11) **EP 0 532 385 B1**
(45) Date de publication et mention de la délivrance du brevet: **27.12.1995**
(21) Numéro de dépôt: 92402391.4
(22) Date de dépôt: 02.09.1992
(51) Int. Cl.: B60S 1/32, B60S 1/38

(54) **Déflecteur de flux d'air pour balai d'essuie-glace et essuie-glace équipé d'un tel déflecteur**
Luftleitvorrichtung für Scheibenwischer und Scheibenwischer mit einer solchen Luftleitvorrichtung
Airflow deflector for windshield wiper and windshield wiper equipped with such a deflector

(30) Priorité: 09.09.1991 FR 9111114
(43) Date de publication de la demande: 17.03.1993
(73) Titulaire: VALEO SYSTEMES D'ESSUYAGE, 78180 Montigny-Le-Bretonneux (FR)
(72) Inventeur: Maubray, Daniel, F-92130 Issy-les-Moulineaux (FR)
(74) Mandataire: Gamonal, Didier

(56) Documents cités:
- EP-A- 0 287 464
- EP-A- 0 398 376
- EP-A- 0 403 385
- EP-A- 0 403 386
- GB-A- 2 226 234

## Description

L'invention concerne un déflecteur de flux d'air pour un balai d'essuie-glace porté par un bras et propre à essuyer une surface d'une glace, du type comprenant une partie profilée rattachée à un voile propre à être fixé à un élément d'essuie-glace, tel que le balai ou le bras, notamment pour véhicules automobiles et dans lequel le voile comprend une face d'appui allongée propre à être appliquée et fixée contre une face de réception de l'élément d'essuie-glace par des moyens de fixation ainsi que des moyens facilitant l'écoulement du flux d'air à travers ledit déflecteur.

L'invention concerne aussi un essuie-glace équipé d'un tel déflecteur.

On connaît déjà, par le document FR-A-2 648 413 ou EP-A-0 403 386, un déflecteur de flux d'air du type précité, dans lequel la partie profilée est fixée à l'élément d'essuie-glace par des moyens d'accrochage, tels que des agrafes ou analogues, qui sont rattachés au voile et qui sont propres à coopérer par clipsage avec l'élément d'essuie-glace. Dans ce dispositif connu, des moyens de guidage du flux d'air sont prévus pour conférer au déflecteur un bon fonctionnement, quel que soit son mouvement pendant l'essuyage.

Dans ce déflecteur connu, les agrafes sont des éléments en forme générale de U qui sont destinés à se clipser soit sur l'armature d'un balai d'essuie-glace, soit sur le bras d'essuie-glace.

Ces agrafes ont pour inconvénient d'être difficiles à réaliser dans la pratique et en plus d'être volumineuses, ce qui perturbe les caractéristiques aérodynamiques du déflecteur et nuit aussi à l'aspect esthétique de l'essuie-glace.

L'invention a notamment pour but de surmonter les inconvénients précités.

L'invention propose à cet effet un déflecteur de flux d'air pour balai d'essuie-glace, du type défini en introduction, caractérisé en ce que les moyens ont la forme de rainures transversales en travers de la face d'appui pour ménager l'écoulement du flux d'air entre le voile et l'élément d'essuie-glace.

Ainsi, le voile est fixé directement contre un élément d'essuie- glace, sans qu'il soit nécessaire de prévoir des agrafes comme dans la technique antérieure.

Les passages d'air ménagés entre le voile du déflecteur et l'élément d'essuie-glace confèrent un bon fonctionnement au déflecteur, quel que soit son mouvement pendant l'essuyage.

Dans ces conditions, il n'est normalement pas nécessaire de prévoir des moyens de guidage d'air du type décrit dans la Demande de brevet français précitée.

Toutefois, si cela apparaît souhaitable, de tels moyens de guidage d'air peuvent être également prévus dans le déflecteur conforme à l'invention.

Avantageusement, le voile est rattaché à la partie profilée, de telle sorte que sa face d'appui se trouve dans une direction sensiblement perpendiculaire à la surface à essuyer.

Dans ces conditions, le voile peut être fixé sur une surface de réception faisant partie de l'élément d'essuie-glace et s'étendant également dans une direction sensiblement perpendiculaire à la surface à essuyer.

Les rainures transversales ménagées sur la face d'appui, qui sont destinées à former des évents ou passages d'air, peuvent présenter différentes formes.

Ainsi, chacune des rainures peut être délimitée par un fond plat parallèle à la face d'appui et par deux parois latérales de raccordement.

En variante, chacune des rainures peut être délimitée par un fond incurvé se raccordant à la face d'appui.

Le déflecteur, selon un mode de réalisation de l'invention, peut comporter, le cas échéant, des nervures transversales se rattachant au voile et à la partie profilée pour, d'une part, contribuer à la rigidification de l'ensemble et, d'autre part, assurer un guidage d'air.

Selon un mode de réalisation de l'invention, le déflecteur comprend au moins deux butées en caoutchouc entourant chacune le voile et la partie profilée et destinées à amortir un éventuel choc entre le déflecteur et la glace à essuyer.

Les moyens de fixation utilisés pour l'accrochage du déflecteur sur l'élément d'essuie-glace peuvent être choisis parmi des vis, des rivets, ou autres moyens analogues.

Sous un autre aspect, l'invention concerne un essuie-glace équipé d'un déflecteur tel que défini précédemment.

Ce déflecteur peut être fixé directement sur le balai d'essuie- glace, c'est-à-dire sur l'armature de ce dernier, ou encore être fixé sur un bras d'essuie-glace.

Dans la description qui suit, faite seulement à titre d'exemple, on se réfère au dessin annexé, sur lequel :
- la figure 1 est une vue de dessus d'un déflecteur selon l'invention porté par un balai d'essuie-glace;
- la figure 2 est une vue en coupe suivant la ligne II-II de la figure 1;
- la figure 3 est une vue en coupe analogue à celle de la figure 2 montrant la fixation du déflecteur sur un bras d'essuie- glace; et
- les figures 4 à 7 montrent différentes configurations de rainures ménagées dans le voile du déflecteur.

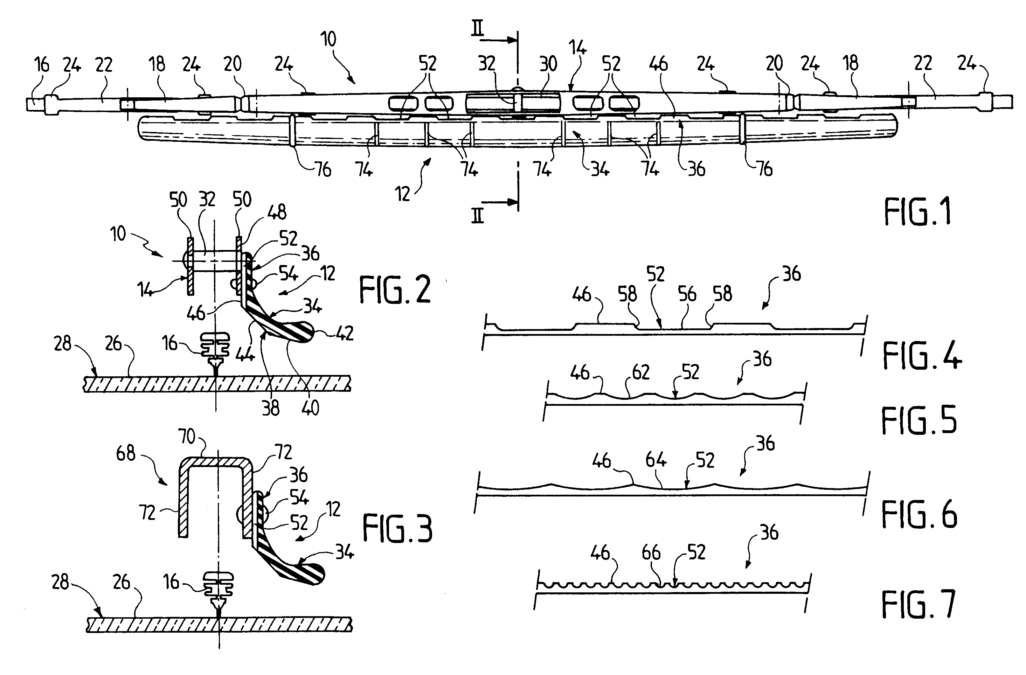

On se réfère tout d'abord aux figures 1 et 2 qui représentent un balai d'essuie-glace 10 équipé d'un déflecteur de flux d'air 12 selon l'invention.

Le balai d'essuie-glace 10 est de structure en soi connue. Il comprend une armature 14 supportant une lame d'essuie-glace 16 au moyen d'un ensemble de palonniers. Cet ensemble de palonniers comprend deux palonniers intermédiaires 18 articulés respectivement aux deux extrémités 20 de l'armature 14 ainsi que quatre palonniers 22 (dont deux seulement sont visibles sur la figure 1). Les palonniers 22 sont portés par paires par les palonniers intermédiaires 18 et supportent chacun la lame 16 au moyen de griffes 24.

La lame 16 est destinée à essuyer une surface 26 d'une glace 28, par exemple un pare-brise de véhicule automobile.

L'armature 14 est constituée généralement par un profilé à section transversale en forme de U renversé qui, dans sa partie centrale, comporte une ouverture 30 pratiquée dans le fond du profilé. Dans cette ouverture 30 est disposé un axe d'articulation 32 destiné à être engagé dans un logement à l'extrémité d'un bras d'essuie-glace (non représenté) pour assurer une liaison articulée entre le bras et le balai.

Le déflecteur 12 comprend une partie profilée 34 qui se raccorde à un voile 36 destiné à être appliqué et fixé contre l'armature 14 du balai 10 dans le cas de la forme de réalisation des figures 1 et 2.

La partie profilée 34 a une forme sensiblement convexe tournée vers la surface 26 à essuyer. Cette forme s'apparente à celle décrite dans le brevet français FR-A-2 621 288 déposée le 6 octobre 1987 par la Demanderesse, ou EP-A-0 311 471.

La partie profilée 34 comporte, sur sa surface interne 38, une première zone 40 s'étendant depuis un bord externe 42 vers le balai 10, cette première zone étant faiblement inclinée par rapport au plan moyen de la surface 26 à essuyer. La partie profilée 34 comprend en outre une seconde zone 44 faisant suite à la première zone 40 et présentant une inclinaison supérieure à l'inclinaison de la première zone.

Le voile 36 est réalisé d'une seule pièce avec la partie profilée 34 et il comporte une face interne d'appui 46 de forme allongée qui se rattache à la partie profilée 34 de manière à se trouver dans une direction sensiblement perpendiculaire à la surface à essuyer.

La face d'appui 46 est appliquée contre une face de réception allongée 48 faisant partie du balai 10. Dans la forme de réalisation des figures 1 et 2, la face de réception 48 est constituée par la face externe de l'une des deux ailes 50 de l'armature 14. Ces deux ailes s'étendent chacune dans une direction sensiblement perpendiculaire à la surface à essuyer.

Comme montré aux figures 1, 2 et 4, des rainures transversales 52 sont ménagées en travers de la face d'appui 46 pour ménager des passages d'air entre le voile et l'élément d'essuie-glace et faciliter ainsi l'écoulement du flux d'air.

Le déflecteur 12 peut être fixé sur l'armature 14 par tout moyen approprié, par exemple par des vis 54 ou autres moyens analogues.

Comme montré à la figure 4, chacune des rainures 52 est délimitée par une paroi de fond 56 qui s'étend parallèlement à la face d'appui 46 et par des parois latérales de raccordement 58.

Dans la forme de réalisation de la figure 5, chacune des rainures 52 est délimitée par une paroi de fond incurvée 62 se raccordant à la face d'appui 46.

Dans le cas de la figure 6, chacune des rainures 52 est délimitée par une paroi de fond 64 de forme incurvée présentant un rayon de courbure plus élevé que dans le cas de la figure 5.

Dans la forme de réalisation de la figure 7, chacune des rainures 52 est délimitée par une paroi de fond 66 de forme incurvée, dans l'exemple de forme semi-circulaire et de faible rayon.

Dans la forme de réalisation de la figure 3 à laquelle on se réfère maintenant, le déflecteur 12 est fixé sur un bras d'essuie-glace 68 qui, dans l'exemple, est un profilé à section en forme générale de U comportant un fond 70 dont dépendent deux ailes 72. Le voile 36 du déflecteur 12 est appliqué et fixé sur la surface externe de l'une des deux ailes 72 par des moyens de fixation 54 analogues à ceux de la figure 2.

Comme montré à la figure 1, le déflecteur 12 comprend des nervures transversales 74 se rattachant à la fois à la partie profilée 34 et au voile 36 pour contribuer à la rigidification de l'ensemble et au guidage de l'air. Par ailleurs, comme mieux décrit dans le document FR-A-2 648 412 ou EP-A-0 403 385, le déflecteur comprend deux butées 76 constituées chacune d'un anneau en caoutchouc entourant le voile et la partie profilée pour amortir un choc éventuel du déflecteur contre la glace.

Le déflecteur d'air de l'invention peut comporter facultativement des moyens de guidage d'air tels que décrits dans la Demande de brevet français FR-A-2 648 413 de la Demanderesse ou EP-A-0 403 386.

Le déflecteur est avantageusement réalisé par moulage d'une matière plastique rigide et est destiné à équiper principalement les essuie-glaces destinés aux pare-brises des véhicules automobiles.

## Revendications

1. Déflecteur de flux d'air pour balai d'essuie-glace porté par un bras et propre à essuyer une surface (26) d'une glace (28), du type comprenant une partie profilée (23) rattachée à un voile (36) propre à être fixé à un élément d'essuie-glace, tel que le balai (10) ou le bras (58), le voile (36) comprenant une face d'appui allongée (46) propre à être appliquée et fixée contre une face de réception (48) de l'élément d'essuie-glace par des moyens de fixation (54) ainsi que des moyens facilitant l'écoulement du flux d'air à travers ledit déflecteur, caractérisé en ce que ces moyens ont la forme de rainures transversales (52) en travers de la face d'appui (46) pour ménager l'écoulement du flux d'air entre ledit voile (26) et l'élément d'essuie-glace.

2. Déflecteur selon la revendication 1, caractérisé en ce que le voile (36) est rattaché à la partie profilée (34) de telle sorte que sa face d'appui (46) se trouve dans une direction sensiblement perpendiculaire à la surface (26) à essuyer.

3. Déflecteur selon l'une des revendications 1 et 2, caractérisé en ce que les rainures transversales (52) de la face d'appui (46) sont délimitées chacune par un fond plat (56) parallèle à la face d'appui (46) et par deux parois latérales de raccordement (58).

4. Déflecteur selon l'une des revendications 1 et 2, caractérisé en ce que les rainures transversales (52) de la face d'appui (46) sont délimitées chacune par un fond incurvé (62;64;66) se raccordant à la face d'appui (46).

5. Déflecteur selon l'une des revendications 1 à 4, caractérisé en ce qu'il comprend des nervures transversales (74) se rattachant au voile (36) et à la partie profilée (34).

6. Déflecteur selon l'une des revendications 1 à 5, caractérisé en ce qu'il comprend au moins deux butées en caoutchouc (76) entourant le voile (36) et la partie profilée (34).

7. Déflecteur selon l'une des revendications 1 à 6, caractérisé en ce que les moyens de fixation (54) sont des vis ou analogues.

8. Essuie-glace, caractérisé en ce qu'il est équipé d'un déflecteur selon l'une des revendications 1 à 7.

9. Essuie-glace selon la revendication 8, caractérisé en ce que le déflecteur (12) est fixé sur le balai (10).

10. Essuie-glace selon la revendication 8, caractérisé en ce que le déflecteur (12) est fixé sur le bras (68).

## Claims

1. An air flow deflector for a screen wiper blade carried by an arm and adapted for wiping a surface (26) of a glass (28), of the type comprising a profiled portion (34) attached to a strip portion (36), which is arranged to be fixed to a screen wiper element such as the blade (10) or the arm (68), the strip portion (36) having an elongate engagement face (46) adapted to be applied and fixed, by fastening means (54), against a reception face (48) of the screen wiper element, together with means facilitating the flow of the air stream across the said deflector, characterised in that the said means are in the form of transverse grooves (52) across the engagement face (46), for controlling the flow of the air stream between the said strip portion (36) and the screen wiper element.

2. A deflector according to Claim 1, characterised in that the strip element (36) is attached to the profiled portion (34) in such a way that its engagement face (46) lies in a direction substantially at right angles to the swept surface (26).

3. A deflector according to Claim 1 or Claim 2, characterised in that each of the transverse grooves (52) of the engagement face (46) is defined by a flat base (56) parallel to the engagement face (46), and by two lateral junction walls (58).

4. A deflector according to Claim 1 or Claim 2, characterised in that each of the transverse grooves (52) of the engagement face is defined by an inwardly curved base (56) joined to the engagement face (46).

5. A deflector according to one of Claims 1 to 4, characterised in that it includes transverse ribs (74) joined to the strip portion (36) and to the profiled portion (34).

6. A deflector according to one of Claims 1 to 5, characterised in that it includes at least two rubber stop elements (76) surrounding the strip portion (36) and the profiled portion (34).

7. A deflector according to one of Claims 1 to 6, characterised in that the fastening means (54) are screws or the like.

8. A screen wiper, characterised in that it is equipped with a deflector according to one of Claims 1 to 7.

9. A screen wiper according to Claim 8, characterised in that the deflector (12) is fixed on the blade (10).

10. A screen wiper according to Claim 8, characterised in that the deflector (12) is fixed on the arm (68).

## Patentansprüche

1. Luftleitvorrichtung für ein Scheibenwischerblatt, das von einen Arm getragen wird und dazu geeignet ist, die Oberfläche (26) einer Scheibe (28) zu wischen, der Bauart mit einem profilierten Teil (23), das an ein Segel (36) angeschlossen ist, das dazu geeignet ist, an ein Scheibenwischerelement, wie dem Blatt (10) oder dem Arm (58) befestigt zu werden, wobei das Segel (36) eine längliche Anlagefläche (46) umfaßt, die dazu geeignet ist, gegen eine Aufnahmefläche (48) des Scheibenwischerelementes mit Hilfe von Befestigungsmitteln (54) angebracht und befestigt zu werden, sowie mit Mitteln, die das Abströmen des Luftstroms durch die Leitvorrichtung erleichtern, **dadurch gekennzeichnet**, daß diese Mittel die Form von Querrillen (52), die durch die Anlagefläche (46) verlaufen, haben, um das Abströmen des Luftstroms zwischen dem Segel (26) (muß heißen: 36) und dem Scheibenwischerelement herbeizuführen.

2. Leitvorrichtung nach Anspruch 1, **dadurch gekennzeichnet**, daß das Segel (36) an den profilierten Teil (34) so angeschlossen ist, daß sich seine Anlagefläche (46) in einer im wesentlichen senkrecht zur zu wischenden Oberfläche (26) verlaufenden Richtung befindet.

3. Leitvorrichtung nach einem der Ansprüche 1 und 2, **dadurch gekennzeichnet**, daß die Querrillen (52) der Anlagefläche (46) jede durch einen flachen Boden (56), der parallel zur Anlagefläche (46) ist und durch zwei sich anschließende Seitenwände (58), begrenzt werden.

4. Leitvorrichtung nach einem der Ansprüche 1 und 2, **dadurch gekennzeichnet**, daß die Querrillen (52) der Anlagefläche (46) jede durch einen gekrümmten Boden (62; 64; 66), der sich an die Anlagefläche anschließt, begrenzt werden.

5. Leitvorrichtung nach einem der Ansprüche 1 bis 4, **dadurch gekennzeichnet**, daß sie Querrippen (74) aufweist, die sich an das Segel (36) und an den profilierten Teil (34) anschließen.

6. Leitvorrichtung nach einem der Ansprüche 1 bis 5, **dadurch gekennzeichnet**, daß sie wenigstens zwei Anlageteile aus Gummi (76) umfaßt, die das Segel (36) und den profilierten Abschnitt (34) umschließen.

7. Leitvorrichtung nach einem der Ansprüche 1 bis 6, **dadurch gekennzeichnet**, daß die Befestigungsmittel (54) Schrauben oder ähnliches sind.

8. Scheibenwischer, **dadurch gekennzeichnet**, daß er mit einer Leitvorrichtung nach einem de Ansprüche 1 bis 7 ausgestattet ist.

9. Scheibenwischer nach Anspruch 8, **dadurch gekennzeichnet**, daß die Leitvorrichtung (12) auf dem Blatt (10) befestigt ist.

10. Scheibenwischer nach Anspruch 8, **dadurch gekennzeichnet**, daß die Leitvorrichtung (12) auf dem Arm (68) befestigt ist.
